# EUROPEAN PATENT SPECIFICATION

(11) **EP 3 823 382 B1**
(45) Date of publication and mention of the grant of the patent: **26.11.2025**
(21) Application number: 19843338.5
(22) Date of filing: 02.07.2019
(51) Int. Cl.: H04L 5/00, H04L 1/1607

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 31.07.2018 CN 201810858389
(43) Date of publication of application: 19.05.2021
(73) Proprietor: HUAWEI TECHNOLOGIES CO., LTD., Shenzhen, Guangdong 518129 (CN)
(72) Inventor: WANG, Xiaohan, Shenzhen, Guangdong 518129 (CN); GE, Shibin, Shenzhen, Guangdong 518129 (CN); HANG, Haicun, Shenzhen, Guangdong 518129 (CN); BI, Xiaoyan, Shenzhen, Guangdong 518129 (CN); ZHANG, Min, Shenzhen, Guangdong 518129 (CN); XU, Hua, Shenzhen, Guangdong 518129 (CN)
(74) Representative: Epping - Hermann - Fischer
(86) International application number: PCT/CN2019/094403
(87) International publication number: WO 2020/024756

(56) References cited:
- CN-A- 103 684 714
- CN-A- 104 272 635
- US-A1- 2010 322 174
- US-A1- 2013 121 304
- QUALCOMM INCORPORATED: "On Multi-TRP and Multi-panel Transmission", vol. RAN WG1, no. Nagoya, Japan; 20170918 - 20170921, 17 September 2017 (2017-09-17), XP051339847, Retrieved from the Internet <URL:http://www.3gpp.org/ftp/Meetings_3GPP_SYNC/RAN1/Docs/> [retrieved on 20170917]
- HUAWEI ET AL: "Solution and TP for multi-TRP PDCCH transmission", vol. RAN WG1, no. Vancouver, Canada; 20180122 - 20180126, 13 January 2018 (2018-01-13), XP051385096, Retrieved from the Internet <URL:http://www.3gpp.org/ftp/tsg%5Fran/WG1%5FRL1/TSGR1%5FAH/NR%5FAH%5F1801/Docs/> [retrieved on 20180113]
- HUAWEI ET AL.: "Discussion on the Multi-TRP/Panel Transmission in NR", 3GPP TSG RAN WGI MEETING #93 R1-1807130, 11 May 2018 (2018-05-11), pages 1 - 7, XP051442328

## Description

### TECHNICAL FIELD

This disclosure relates to the field of communications technologies, and in particular, to a communications method and apparatus.

### BACKGROUND

Document "On Multi-TRP and Multi-panel Transmission", Qualcomm Incorporated, R1-1716392 which is a revision of R1-1713391, suggests the support of gNB configuration of UE to transmit PUCCH using one or more beams derived from Rx Beams corresponding to SS/CSI-RS port sets or PDCCH DMRS ports. According to this suggestion, a PUCCH beam rule is a mapping from the subset of monitored PDCCH beams in a slot/mini-slot to a subset of PUCCH beams, according to which the gNB can define a set of rules for deriving the PUCCH beam to transmit based on the monitored beams on a given slot/mini-slot. Another approach is gNB directly indicating via PDCCH the PUCCH beam to use. In particular, PUCCH beam associated with PDCCH beam 2 is degraded, PDCCH transmitted over beam 2 can signal the use of PUCCH beam 1 in DCI.

Document US 2013/0121304 A1 relates to a wireless communication device. The device includes a transceiver coupled to a processor configured to determine an antenna port associated with a received control message scheduling a transport block, to determine an acknowledgement resource based on the antenna port, and to cause the transceiver to transmit an acknowledgement on the acknowledgement resource, wherein the acknowledgement indicates receipt or non-receipt of the transport block.

Document "Solution and TP for multi-TRP PDCCH transmission", Huawei, HiSilicon, R1-1800824, describes issues on PDCCH designs for multi-TRP transmissions, including single/multiple PDCCH transmission.

Rapid development of mobile communications imposes a higher requirement on performance of a user at a cell edge. A coordinate multipoint (coordinate multi-point, CoMP) technology has an obvious effect on improving the performance of the user at the cell edge. To perform multipoint coordination by using the CoMP technology is an effective way to improve system performance. Non-coherent joint transmission (non-coherent joint transmission, NCJT) is one of important multipoint coordination solutions. In the NCJT solution, multi-transmission and reception points (multi-transmitting and receiving point, multi-TRP) may simultaneously serve a same terminal device.

During multi-TRP coordination, in a new radio (new radio, NR) communications system, multi-TRPs may simultaneously send downlink control information (downlink control information, DCI) to a terminal device, and the terminal device may detect a plurality of pieces of DCI indicating physical downlink shared channels (physical downlink shared channel, PDSCH) in a plurality of different search spaces (search space).When the multi-TRPs perform non-coherent joint transmission, the terminal device may send uplink control information (uplink control information, UCI) to the multi-TRPs by using a plurality of physical uplink control channels (physical uplink control channel, PUCCH). In a non-ideal backhaul (non-ideal backhaul) case, the multi-TRPs cannot interact in real time. If the multi-TRPs each send one piece of DCI to the terminal device at a same moment to indicate the PDSCH, each of the multi-TRPs indicates a corresponding PUCCH resource by using a PUCCH resource indicator (PUCCH resource indicator) field (which may alternatively be combined with another parameter) in the DCI, but the multi-TRPs do not know the PUCCH resource indicated by each other. If PUCCH resources used by the terminal device to report an ACK/a NACK at a same moment are the same, a resource conflict occurs.

Therefore, a problem of a possible conflict between PUCCH resources needs to be resolved.

### SUMMARY

This disclosure provides a communications methods and communication apparatuses, to resolve a problem of a possible conflict between PUCCH resources.

The present invention is set out by the set of appended claims. In the following, parts of the description and drawing referring to examples or implementations, which are not covered by the claims are not presented as embodiments of the invention, but as illustrative examples useful for understanding the invention. The embodiments of the invention are provided by the set of appended claims.

According to a first aspect, a communication method is provided. The method includes, as claimed: receives PUCCH resource configuration indication information from a network device, where the PUCCH resource configuration indication information is used to indicate a PUCCH configuration, and the PUCCH configuration is associated with a transport block parameter. It is not explicitly claimed but possible that the PUCCH configuration is also associated with one or more of the following parameters: a downlink channel resource parameter and a demodulation reference signal port-related parameter.

The PUCCH configuration is associated with the transport block parameter and possibly also with one or more parameters of the downlink channel resource and the demodulation reference signal port-related parameter. When a terminal device sends uplink control information by using a PUCCH resource, a PUCCH resource conflict can be avoided, thereby ensuring transmission reliability.

The method further includes, as claimed:
receiving downlink control information from the network device; and determining, based on the transport block parameter enabled by the downlink control information, a PUCCH configuration associated with the one or more parameters. It is not explicitly claimed but possible that the determining is also based on one or more parameters of a downlink channel resource parameter corresponding to the downlink control information and a demodulation reference signal port-related parameter of a physical downlink shared channel indicated by the downlink control information.

The terminal device may receive the downlink control information DCI based on the downlink channel resource parameter, or determine the demodulation reference signal (demodulation reference signal, DMRS) port-related parameter of the PDSCH indicated by the DCI, or determine the transport block (transmission block, TB) parameter enabled by the DCI. The PUCCH configuration is associated with one or more parameters of the downlink channel resource parameter, the DMRS port-related parameter, and the TB parameter, so that the PUCCH configuration associated with the one or more parameters corresponding to the DCI can be determined.

With reference to the first aspect, in another possible implementation, there are one or more network devices.

In this implementation, a plurality of the associated PUCCH configurations may be determined based on the foregoing one or more parameters corresponding to the DCI received from the plurality of network devices.

According to a second aspect, a communication method is provided. The method includes, as claimed:
sending physical uplink control channel PUCCH resource configuration indication information to a terminal device, where the PUCCH resource configuration indication information is used to indicate a PUCCH configuration, and the PUCCH configuration is associated with a transport block parameter. It is not explicitly claimed but possible that the PUCCH configuration is associated with one or more of the following parameters: a downlink channel resource parameter and a demodulation reference signal port-related parameter.

The method further includes, as claimed:
sending downlink control information to the terminal device based on the downlink channel resource parameter.

With reference to the first aspect or the second aspect, in a possible implementation, the downlink channel resource parameter includes one or more of the following resource parameters: a physical downlink control channel resource configuration, a control resource set group, a search space group, and a physical downlink shared channel resource configuration.

In this implementation, a PDCCH resource configuration includes a control resource set group and a search space group. The PUCCH configuration may be associated with a control resource set group and a search space group in one PDCCH resource configuration, or may be associated with a plurality of PDCCH resource configurations.

With reference to the first aspect or the second aspect, in another possible implementation, the PUCCH configuration includes one or more PUCCH resource configurations, and the one or more PUCCH resource configurations are respectively associated with the one or more parameters.

In this implementation, the PUCCH configuration includes one or more PUCCH resource configurations, and an associated PUCCH resource configuration may be determined based on the foregoing one or more parameters, so that a PUCCH resource conflict can be avoided. PUCCH resources of the one or more PUCCH resource configurations may have no intersection.

With reference to the first aspect or the second aspect, in still another possible implementation, the PUCCH configuration includes one or more PUCCH resource groups, each PUCCH resource group includes one or more PUCCH resources, and the one or more PUCCH resource groups are respectively associated with the one or more parameters.

In this implementation, a plurality of PUCCH resources are grouped, and the PUCCH resource group is associated with the foregoing one or more parameters, so that a PUCCH resource conflict can be avoided.

With reference to the first aspect or the second aspect, in still another possible implementation, the PUCCH configuration includes one or more PUCCH resource sets, each PUCCH resource set includes one or more PUCCH resource groups, each PUCCH resource group includes one or more PUCCH resources, and the one or more PUCCH resource groups included in the one or more PUCCH resource sets are respectively associated with the one or more parameters.

In this implementation, a plurality of PUCCH resources in a PUCCH resource set are grouped, and a PUCCH resource group in the PUCCH resource set is associated with the foregoing one or more parameters, so that a PUCCH resource conflict can be avoided.

With reference to the first aspect or the second aspect, in still another possible implementation, the PUCCH configuration includes one or more PUCCH resource set groups, each PUCCH resource set group includes one or more PUCCH resource sets, each PUCCH resource set includes one or more PUCCH resources, and the one or more PUCCH resource set groups are respectively associated with the one or more parameters.

In this implementation, PUCCH resource sets are grouped, and the PUCCH resource set group is associated with the foregoing one or more parameters, so that a PUCCH resource conflict can be avoided.

According to a third aspect, a communication method is provided. The method includes: receiving physical uplink control channel PUCCH resource configuration indication information from a network device, where the PUCCH resource configuration indication information is used to indicate a PUCCH resource configuration, and the PUCCH resource configuration indication information is associated with one or more of the following parameters: a downlink channel resource parameter, a demodulation reference signal port-related parameter, and a transport block parameter. With reference to the third aspect, in a possible implementation, the method further includes: receiving downlink control information from the network device; and determining, based on one or more parameters of a downlink channel resource parameter corresponding to the downlink control information, a demodulation reference signal port-related parameter of a physical downlink shared channel indicated by the downlink control information, and a transport block parameter enabled by the downlink control information, PUCCH resource configuration indication information associated with the one or more parameters.

With reference to the third aspect, in another possible implementation, there are one or more network devices.

According to a fourth aspect, a communication method is provided. The method includes: sending physical uplink control channel PUCCH resource configuration indication information to a terminal device, where the PUCCH resource configuration indication information is used to indicate a PUCCH resource configuration, and the PUCCH resource configuration indication information is associated with one or more of the following parameters: a downlink channel resource parameter, a demodulation reference signal port-related parameter, and a transport block parameter. With reference to the fourth aspect, in a possible implementation, the method further includes: sending downlink control information to the terminal device based on the downlink channel resource parameter.

With reference to the third aspect or the fourth aspect, in a possible implementation, the downlink channel resource parameter includes one or more of the following resource parameters: a physical downlink control channel resource configuration, a control resource set group, a search space group, and a physical downlink shared channel resource configuration.

With reference to the third aspect or the fourth aspect, in another possible implementation, the PUCCH resource configuration indication information includes one or more PUCCH resource configurations, and the one or more PUCCH resource configurations are respectively associated with the one or more parameters.

With reference to the third aspect or the fourth aspect, in still another possible implementation, the PUCCH resource configuration indication information includes indication information of one or more PUCCH resource groups, each PUCCH resource group includes one or more PUCCH resources, and the one or more PUCCH resource groups are respectively associated with the one or more parameters.

With reference to the third aspect or the fourth aspect, in still another possible implementation, the PUCCH resource configuration indication information includes indication information of one or more PUCCH resource sets, each PUCCH resource set includes one or more PUCCH resource groups, each PUCCH resource group includes one or more PUCCH resources, and the one or more PUCCH resource groups included in the one or more PUCCH resource sets are respectively associated with the one or more parameters.

With reference to the third aspect or the fourth aspect, in still another possible implementation, the PUCCH resource configuration indication information includes indication information of one or more PUCCH resource set groups, each PUCCH resource set group includes one or more PUCCH resource sets, each PUCCH resource set includes one or more PUCCH resources, and the one or more PUCCH resource set groups are respectively associated with the one or more parameters.

According to a fifth aspect, a communication method is provided. The method includes: receiving a plurality of pieces of downlink control information, where the plurality of pieces of downlink control information are respectively corresponding to one or more downlink channel resource parameters, demodulation reference signal port-related parameters, or transport block parameters; selecting one of the plurality of pieces of downlink control information according to a criterion, and determining a physical uplink control channel resource associated with the downlink channel resource parameter, the demodulation reference signal port-related parameter, or the transport block parameter based on a downlink channel resource parameter, a demodulation reference signal port-related parameter, or a transport block parameter corresponding to the selected downlink control information; and sending combined feedback information of the plurality of pieces of downlink data by using the physical uplink control channel resource.

With reference to the fifth aspect, in a possible implementation, the method further includes: combining the feedback information of the plurality of pieces of downlink control information according to a preset combination rule.

According to a sixth aspect, a communication method is provided. The method includes: sending, by a first network device, downlink control information to a terminal device, where the downlink control information corresponds to a downlink channel resource parameter, a demodulation reference signal port-related parameter, or a transport block; receiving, by the first network device, combined feedback information that is of a plurality of pieces of downlink data and that is sent by the terminal device; and notifying, by the first network device, another network device of feedback information of downlink data sent by the another network device.

According to a seventh aspect, a communication method is provided. The method includes: receiving first downlink control information from a first network device and second downlink control information from a second network device, where the first downlink control information includes indication information of a physical uplink control channel resource; and sending combined feedback information of downlink data to the first network device by using the physical uplink control channel resource indicated by the first downlink control information, where the combined feedback information of the downlink data includes feedback information of first downlink data and feedback information of second downlink data.

According to an eighth aspect, a communication method is provided. The method includes: sending, by a first network device, first downlink control information to a terminal device, where the first downlink control information includes indication information of a physical uplink control channel resource, receiving, by the first network device, combined feedback information of downlink data sent by the terminal device, where the combined feedback information of the downlink data includes feedback information of first downlink data and feedback information of second downlink data; and notifying, by the first network device, a second network device of the feedback information of the second downlink data.

According to a ninth aspect, a communications apparatus is provided. The communications apparatus can implement the foregoing communication method in the first aspect, the third aspect, the fifth aspect or the seventh aspect. For example, the communications apparatus may be a chip (such as a baseband chip or a communications chip) or a terminal device. The foregoing method may be implemented by using software, hardware, or hardware executing corresponding software.

In a possible implementation, a processor and a memory are included in a structure of the communications apparatus. The processor is configured to support the apparatus in performing a corresponding function in the foregoing communication method. The memory is configured to couple to the processor, where the memory stores a program (instruction) and/or data that are necessary for the apparatus. Optionally, the communications apparatus may further include a communications interface, configured to support communication between the apparatus and another network element.

In another possible implementation, the communications apparatus may include a unit or a module for performing a corresponding action in the foregoing method.

In still another possible implementation, a processor and a transceiver apparatus are included. The processor is coupled to the transceiver apparatus. The processor is configured to execute a computer program or an instruction, to control the transceiver apparatus to send or receive information. When the processor executes the computer program or the instruction, the processor is further configured to implement the foregoing method. The transceiver apparatus may be a transceiver, a transceiver circuit, or an input/output interface. When the communications apparatus is a chip, the transceiver apparatus is a transceiver circuit or an input/output interface.

In still another possible implementation, a processor is included in a structure of the communications apparatus. The processor is configured to support the apparatus in performing a corresponding function in the foregoing communication method.

When the communications apparatus is a chip, the transceiver unit may be an input/output unit such as an input/output circuit or a communications interface. When the communications apparatus is a network device, the transceiver unit may be a transmitter and a receiver, or a transmitting machine and a receiving machine.

According to a tenth aspect, a communications apparatus is provided. The communications apparatus can implement the foregoing communication method in the second aspect, the fourth aspect, the sixth aspect, or the eighth aspect. For example, the communications apparatus may be a chip (such as a baseband chip or a communications chip) or a network device. The foregoing method may be implemented by using software, hardware, or hardware executing corresponding software.

In a possible implementation, a processor and a memory are included in a structure of the communications apparatus. The processor is configured to support the apparatus in performing a corresponding function in the foregoing communication method. The memory is configured to couple to the processor, where the memory stores a program (instruction) and data that are necessary for the apparatus. Optionally, the communications apparatus may further include a communications interface, configured to support communication between the apparatus and another network element.

In another possible implementation, the communications apparatus may include a unit or a module for performing a corresponding action in the foregoing method.

In still another possible implementation, a processor and a transceiver apparatus are included. The processor is coupled to the transceiver apparatus. The processor is configured to execute a computer program or an instruction, to control the transceiver apparatus to send or receive information. When the processor executes the computer program or the instruction, the processor is further configured to implement the foregoing method. The transceiver apparatus may be a transceiver, a transceiver circuit, or an input/output interface. When the communications apparatus is a chip, the transceiver apparatus is a transceiver circuit or an input/output interface.

In still another possible implementation, a processor is included in a structure of the communications apparatus. The processor is configured to support the apparatus in performing a corresponding function in the foregoing communication method.

When the communications apparatus is a chip, the transceiver unit may be an input/output unit such as an input/output circuit or a communications interface. When the communications apparatus is a network device, the transceiver unit may be a transmitter and a receiver, or a transmitting machine and a receiving machine.

According to an eleventh aspect, a computer-readable storage medium is provided. The computer-readable storage medium stores a computer program or an instruction, and when the computer program or the instruction is executed, the method according to any one of the foregoing aspects is implemented.

According to a twelfth aspect, a computer program product including an instruction is provided. When the instruction is run on a computer, the computer is enabled to perform the method according to any one of the foregoing aspects. According to a thirteenth aspect, a communications system is provided. The communications system includes the communications apparatuses in the ninth aspect and the tenth aspect.

### BRIEF DESCRIPTION OF DRAWINGS

To describe the technical solutions in the implementations of the present disclosure or in the background more clearly, the following describes the accompanying drawings that need to be used in the implementations of the present disclosure or the background.
FIG. 1 is a schematic diagram of a communications system according to this disclosure;
FIG. 2 is a schematic flowchart of a communication method according to an implementation of this disclosure;
FIG. 3a to FIG. 3d are schematic diagrams of example configurations of a plurality of PUCCH resources according to an implementation of this disclosure;
FIG. 4 is a schematic flowchart of another communication method according to an implementation of this disclosure;
FIG. 5 is a schematic flowchart of still another communication method according to an implementation of this disclosure;
FIG. 6 is a schematic structural diagram of a communications apparatus according to an implementation of this disclosure;
FIG. 7 is a schematic structural diagram of a communications apparatus according to an implementation of this disclosure;
FIG. 8 is a schematic structural diagram of a communications apparatus according to an implementation of this disclosure;
FIG. 9 is a schematic structural diagram of a communications apparatus according to an implementation of this disclosure;
FIG. 10 is a schematic structural diagram of a communications apparatus according to an implementation of this disclosure;
FIG. 11 is a schematic structural diagram of a communications apparatus according to an implementation of this disclosure;
FIG. 12 is a schematic structural diagram of a communications apparatus according to an implementation of this disclosure; and
FIG. 13 is a schematic structural diagram of a communications apparatus according to an implementation of this disclosure.

### DESCRIPTION OF EMBODIMENTS

The following describes the implementations of the present disclosure with reference to the accompanying drawings in the implementations of the present disclosure.

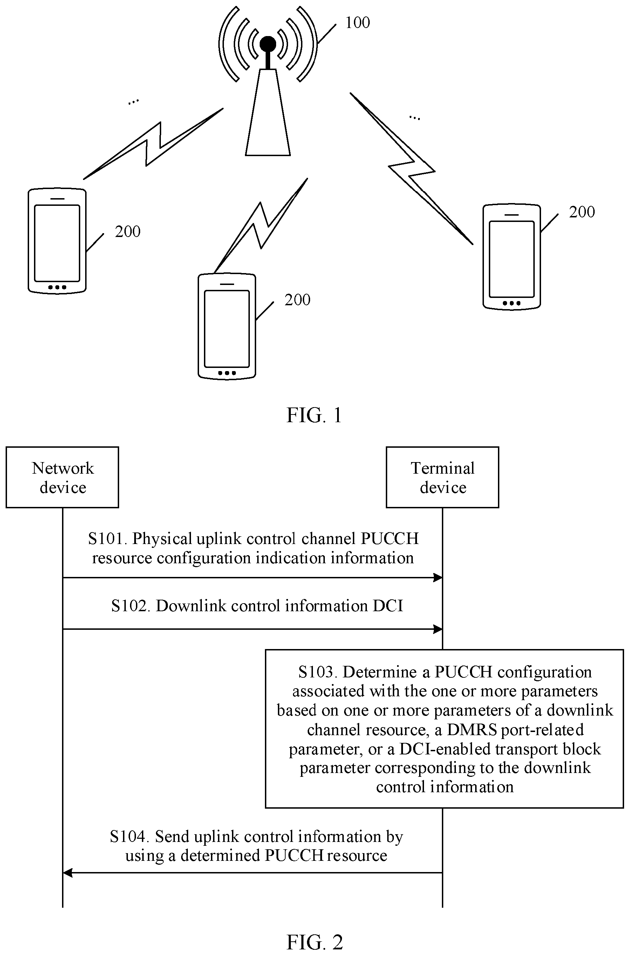

FIG. 1 is a schematic diagram of a communications system according to this disclosure. The communications system may include at least one network device 100 (only one is shown) and one or more terminal devices 200 connected to the network device 100.

The network device 100 may be a device that can communicate with the terminal device 200. The network device 100 may be any device with a wireless transceiver function, and includes but is not limited to a NodeB NodeB, an evolved NodeB eNodeB, a base station in a fifth generation (the fifth generation, 5G) communications system, a base station or a network device in a future communications system, an access node in a Wi-Fi system, a wireless relay node, a wireless backhaul node, and the like. Alternatively, the network device 100 may alternatively be a radio controller in a cloud radio access network (cloud radio access network, CRAN) scenario. The network device 100 may alternatively be a small cell, a TRP, and the like. A specific technology and a specific device form that are used by the network device are not limited in the implementations of this disclosure.

The terminal device 200 is a device with a wireless transceiver function, may be deployed on land, indoor or outdoor, and may be handheld, wearable, or vehicle-mounted; or may be deployed on a water surface, for example, on a ship; or may be deployed in the air, for example, on a plane, a balloon, and a satellite. The terminal device may be a mobile phone (mobile phone), a pad (pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), and the like. An application scenario is not limited in the implementations of this disclosure. The terminal device may sometimes be referred to as user equipment (user equipment, UE), an access terminal device, a UE unit, a mobile station, a mobile console, a remote station, a remote terminal device, a mobile device, a terminal (terminal), a wireless communications device, a UE agent, a UE apparatus, and the like.

It should be noted that, terms "system" and "network" in the implementations of this disclosure may be used interchangeably. "A plurality of" means two or more than two. In view of this, "a plurality of" may also be understood as "at least two" in the implementations of this disclosure. The term "and/or" describes an association relationship between associated objects and represents that three relationships may exist. For example, A and/or B may represent the following three cases: only A exists, both A and B exist, and only B exists. In addition, unless otherwise specified, the character "/" generally indicates an "or" relationship between the associated objects.

Implementations of this disclosure provide a communications method and apparatus in which PUCCH resource configuration indication information is associated with one or more parameters of a downlink channel resource parameter, a demodulation reference signal port-related parameter, and a transport block parameter, so that when a terminal device sends uplink control information by using a PUCCH resource, a PUCCH resource conflict can be avoided, thereby ensuring transmission reliability.

FIG. 2 is a schematic flowchart of a communication method according to an implementation of this disclosure. S101. A network device sends PUCCH resource configuration indication information to a terminal device. The terminal device receives the PUCCH resource configuration indication information from the network device. The PUCCH resource configuration indication information is used to indicate a PUCCH configuration.

In this implementation, a network device sends DCI by using a physical downlink control channel (physical downlink control channel, PDCCH), and sends data by using a PDSCH. The DCI is used to indicate the PDSCH. Specifically, the DCI carries indication information indicating a length of a time domain resource occupied by the PDSCH, a frequency domain resource of the PDSCH, a modulation scheme of the PDSCH, and the like. The terminal device may determine, based on the received DCI, a resource on which the PDSCH is to be received. The terminal device sends UCI by using the PUCCH. The UCI may include an acknowledgment (acknowledgment, ACK)/a non-acknowledgment (non-acknowledgment, NACK) of a hybrid automatic repeat request (hybrid automatic repeat request, HARQ) of the PDSCH, and may further include other uplink control information, for example, channel state information (channel state information, CSI) and a scheduling request (scheduling request, SR).

The terminal device may detect the DCI based on one or more downlink channel resource parameters, or determine a demodulation reference signal (demodulation reference signal, DMRS) port-related parameter of a PDSCH indicated by a plurality of pieces of received DCI, or determine a transport block (transmission block, TB) parameter enabled by the DCI. Therefore, the terminal device can distinguish, based on the received DCI, the downlink channel resource, the DMRS port-related parameter, or the TB parameter corresponding to the DCI. When the terminal device sends the UCI by using the PUCCH, to avoid a conflict between PUCCH resources configured by the network device, in this implementation, the PUCCH configuration is associated with the downlink channel resource, the DMRS port-related parameter, or the TB parameter. The network device sends the PUCCH resource configuration indication information to the terminal device by using higher layer signaling. The PUCCH resource configuration indication information is used to indicate a PUCCH configuration. The higher layer signaling may be RRC signaling, a MAC-CE, and the like. The terminal device receives the PUCCH resource configuration indication information.

Specifically, in this implementation, the downlink channel resource parameter is configured. The downlink channel resource parameter includes one or more of the following resource parameters: a physical downlink control channel resource configuration (physical downlink control channel config, PDCCH-config), a control resource set group (control resource set group, CORESET group), a search space group (search space group), and a physical downlink shared channel resource configuration (PDSCH-config). One CORESET group includes one or more CORESETs. The CORESET may be referred to as a control resource set, that is, a time-frequency resource of the CORESET, may be specifically a size of a resource block occupied in frequency domain or a quantity of symbols occupied in time domain; and may alternatively be referred to as a control resource set configuration parameter, that is, a signaling configuration-related parameter, and is used to obtain a CORESET time-frequency resource. One search space group includes one or more search spaces. The search space may be referred to as a search space configuration parameter, namely, a signaling configuration-related parameter, and is used to obtain a time and a manner of searching for a candidate PDCCH or a possible PDCCH. The search space may also be referred to a location for detecting the candidate PDCCH, or a location that needs to be detected.

The downlink channel resource parameter in this disclosure may include one or more PDCCH-configs, and each PDCCH-config may include one or more CORESETs and/or one or more search spaces, or each PDCCH-config may include an index number of a CORESET and/or an index number of a search space. Parameters included in the PDCCH-config can be used to detect the candidate PDCCH.

The downlink channel resource parameter in this disclosure may alternatively include one or more CORESET groups, or the downlink channel resource parameter in this disclosure may alternatively include one or more search space groups.

Therefore, the terminal device may detect the DCI based on the one or more CORESET groups or search space groups, or may detect the DCI based on the one or more PDCCH-configs. The terminal device may detect a plurality of pieces of DCI from different network devices based on a plurality of configured downlink channel resources. The network device sends the DCI to the terminal device by using a downlink channel.

In a case of multi-TRPs, the multi-TRPs may send a plurality of pieces of DCI to one terminal device. A specific implementation solution of detecting the DCI may include one or more of the following:
(1) A network side configures a plurality of PDCCH-configs for the terminal device, and the terminal device blindly detects one piece of DCI for a resource (a CORESET and/or a search space) indicated by each PDCCH-config.
(2) A network side configures one or more CORESET groups for the terminal device, and the terminal device blindly detects one piece of DCI for a resource indicated in each CORESET group.
   The CORESET group may be indicated in two manners: (a) A parameter of each CORESET group includes a control resource set group identifier (CORESET group ID). (b) The CORESET group ID is indicated in the PDCCH-config. Certainly, an indication manner of the CORESET group is not limited to the foregoing two manners.
(3) A network side configures one or more search space groups for the terminal device, and the terminal device blindly detects one piece of DCI for a resource indicated in each search space group.

This disclosure supports scenarios of single-TRP (single-TRP) and multi-TRP. The multi-TRP scenario is used as an example. Multi-TRPs send the DCI based on a plurality of downlink channel resources (a PDCCH-config, a CORESET group, and a search space group), and the terminal device may detect the plurality of pieces of DCI based on the plurality of downlink channel resources. A specific method may be any one of the foregoing solutions (1) to (3). In this disclosure, it is assumed that one of the foregoing solutions has been used to configure the downlink channel resource parameter.

Based on the detected downlink channel resource parameter of the DCI, the PUCCH configuration associated with the downlink channel resource parameter may be determined, so that a PUCCH resource conflict can be avoided.

In addition, the DCI may be further used to indicate the DMRS port-related parameter of the PDSCH. The DMRS port-related parameter includes one or more of the following parameters: a DMRS port (DMRS port) number, a DMRS port group (DMRS port group) number, and the like. One DMRS port group includes several DMRS ports. It is assumed that two DMRS port groups are configured by using radio resource control (radio resource control, RRC) signaling, each group includes several DMRS ports, and DMRS ports in a same group are quasi-co-located (quasi-co location, QCL). The PUCCH configuration associated with the DMRS port-related parameter is determined based on the DMRS port-related parameter indicated by the DCI, so that a PUCCH resource conflict can be avoided. For example, in the multi-TRP scenario, it may be considered that each of two DMRS port groups corresponds to one TRP, and two pieces of DCI received through ports or port groups of the two DMRSs are from different TRPs.

The DCI is further used to indicate a TB-related parameter. The TB-related parameter may be a modulation and coding scheme (Modulation and coding scheme, MCS) parameter used to configure a modulation order and a bit rate, a new data indicator (New data indicator, NDI) parameter used to indicate new transmission or retransmission, a redundancy version (Redundancy version, RV) parameter used to indicate current transmission, and the like. The TB-related parameter may be used to indicate whether the TB is enabled. The PUCCH configuration is associated with the TB parameter or an identifier corresponding to the TB, so that a PUCCH resource conflict can be avoided. For example, if DCI sent by a TRP 1 enables a TB 1, and DCI sent by a TRP 2 enables a TB 2, a PUCCH resource configuration of the TRP 1 may be associated with the TB 1, and a PUCCH resource configuration of the TRP 2 may be associated with the TB 2.

A specific manner of associating the PUCCH configuration with the foregoing parameters may be one or more of the following manners:
each PDCCH-config includes one field, indicating a PUCCH configuration associated with the field;
RRC signaling indicates a PDCCH-config ID corresponding to each PUCCH configuration;
RRC signaling indicates one or more CORESET groups, and a CORESET group configuration indicates a PUCCH configuration associated with the CORESET group;
RRC signaling indicates a CORESET-group-ID associated with each PUCCH configuration;
each CORESET group configuration includes one field, indicating a PUCCH configuration associated with the field;
RRC signaling indicates all CORESET-IDs associated with each PUCCH configuration;
RRC signaling indicates that one or more search space group configurations include one field, indicating a PUCCH configuration associated with the search space groups;
RRC signaling indicates a plurality of search space groups, indicating a search-space-group-ID associated with each PUCCH configuration;
each search space configuration includes one field, indicating a PUCCH configuration associated with the field;
RRC signaling indicates all search-space-IDs associated with each PUCCH configuration;
RRC signaling indicates one or more DMRS port groups, and a DMRS port group configuration includes one field, indicating a PUCCH configuration associated with the field;
RRC signaling indicates one or more DMRS port groups, indicating a DMRS-portgroup-ID associated with each PUCCH configuration;
RRC signaling indicates, for each DMRS port, a PUCCH configuration associated with the DMRS port;
RRC signaling indicates all DMRS ports associated with each PUCCH configuration;
RRC signaling indicates, for each TB, a PUCCH configuration associated with the TB;
RRC signaling indicates a TB associated with each PUCCH configuration;
each PDSCH-config includes one field, indicating a PUCCH configuration associated with the field; or
RRC signaling indicates a PDSCH-config ID corresponding to each PUCCH configuration.

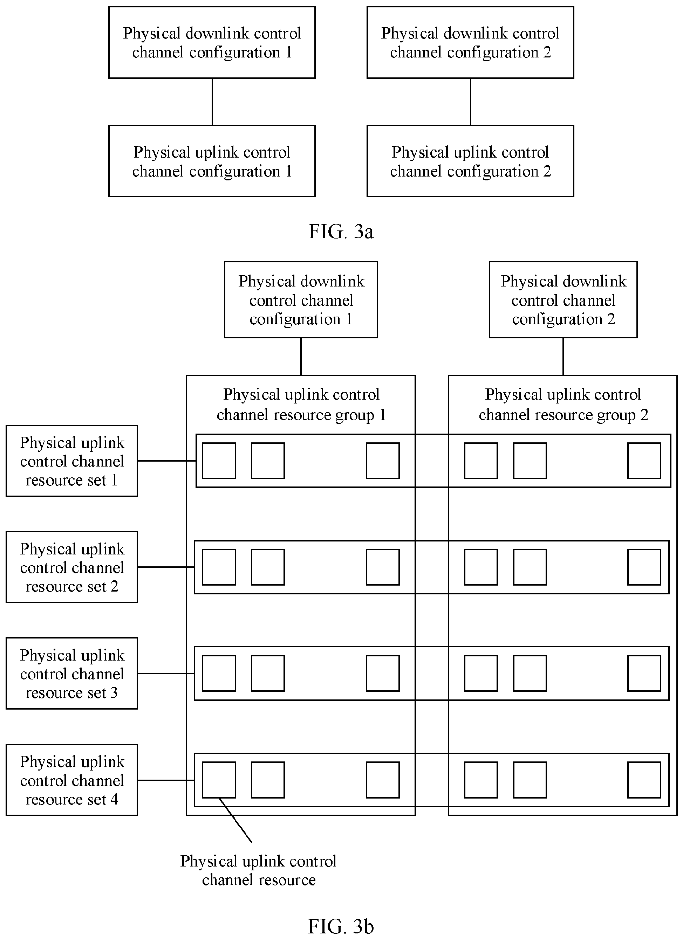

The PUCCH configuration is associated with one or more of the foregoing parameters, so that when the UCI is sent based on the configured PUCCH resource, it can be ensured that no conflict occurs on the configured PUCCH resource. Specifically, in an implementation, the PUCCH configuration includes one or more PUCCH resource configurations. FIG. 3a is a schematic diagram of a PUCCH resource configuration. For example, two TRPs serve a terminal device. Two PUCCH resource configurations are configured by using RRC signaling, and are respectively associated with two PDCCH-configs/two CORESET groups/two search space groups/two PDSCH-configs/two DMRS port groups/two TBs (for example, in FIG. 3a, two PUCCH resource configurations are associated with two PDCCH-configs). In addition, PUCCH resources indicated in the two PUCCH resource configurations may have no intersection. In specific implementation, an identifier of a PUCCH resource configuration associated with a PDCCH-config/CORESET group/search space group/PDSCH-config/DMRS port group/TB is indicated by using RRC signaling. Alternatively, an ID of a PDCCH-config/CORESET group/search space group/PDSCH-config/DMRS port group/TB associated with each PUCCH resource configuration may be indicated in the PUCCH configuration.

As shown in FIG. 3a, it is configured as that two PUCCH resource configurations are respectively associated with two PDCCH-configs, so that a PUCCH resource conflict can be avoided. A manner of determining other parameters associated with the PUCCH configuration is similar to what is described above.

In another implementation, the PUCCH configuration includes one or more PUCCH resource groups, each PUCCH resource group includes one or more PUCCH resources, and the one or more PUCCH resource groups are respectively associated with the one or more parameters.

FIG. 3b is a schematic diagram of another PUCCH resource configuration. For example, two TRPs serve a terminal device. One PUCCH configuration is configured by using RRC signaling. The PUCCH configuration includes two PUCCH resource groups (PUCCH resource group). Each PUCCH resource group includes one or more PUCCH resources. Two PUCCH resource groups are respectively associated with two PDCCH-configs/two CORESET groups/two search space groups/two PDSCH-configs/two DMRS port groups/two TBs (for example, in FIG. 3b, two PUCCH resource groups are associated with two PDCCH-configs).

Based on the association relationship, the terminal device may determine, based on a PDCCH-config corresponding to DCI detected by the terminal device, a PUCCH resource group associated with the PDCCH-config, and select a PUCCH resource from the PUCCH resource group to send UCI, so that a PUCCH resource conflict can be avoided. A manner of determining other parameters associated with the PUCCH configuration is similar to what is described above.

In still another implementation, the PUCCH configuration includes one or more PUCCH resource set groups, each PUCCH resource set group includes one or more PUCCH resource sets, each PUCCH resource set includes one or more PUCCH resources, and the one or more PUCCH resource set groups are respectively associated with the one or more parameters.

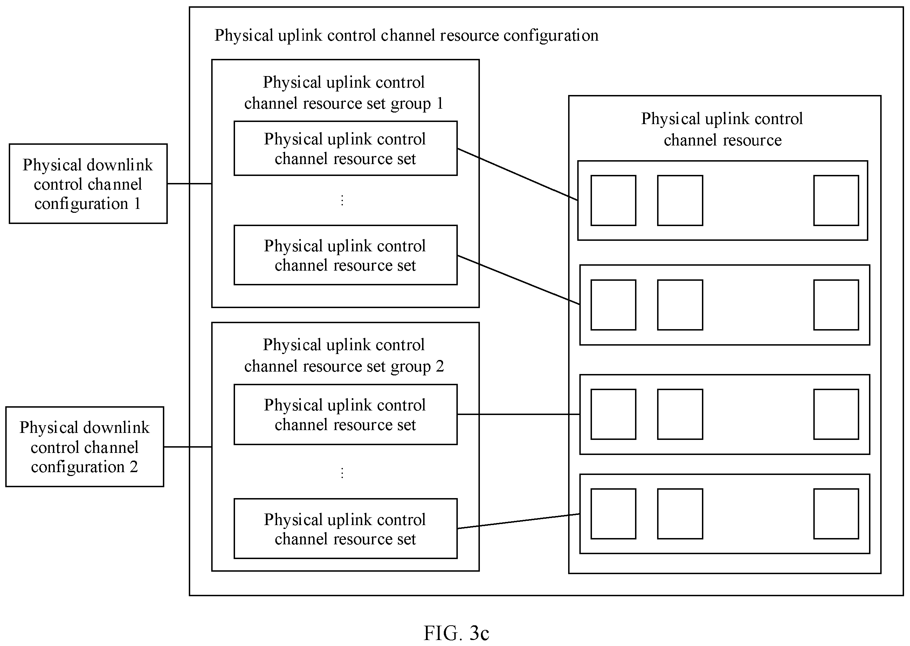

FIG. 3c is a schematic diagram of still another PUCCH resource configuration. For example, two TRPs serve a terminal device. One PUCCH configuration is sent by using RRC signaling, and the PUCCH configuration includes indication information of two PUCCH resource set groups. The two PUCCH resource set groups are respectively associated with two PDCCH-configs/two CORESET groups/two search space groups/two PDSCH-configs/two DMRS port groups/two TBs.

In specific implementation, the RRC signaling indicates PUCCH resource set group IDs associated with the two PDCCH-configs/two CORESET groups/two search space groups/two PDSCH-configs/two DMRS port groups/two TBs.

Based on the association relationship, the terminal device may determine, based on a PDCCH-config corresponding to DCI detected by the terminal device, a PUCCH resource set group associated with the PDCCH-config, and select a PUCCH resource from the PUCCH resource set group to send UCI, so that a PUCCH resource conflict can be avoided. A manner of determining other parameters associated with the PUCCH configuration is similar to what is described above.

In still another implementation, the PUCCH configuration includes one or more PUCCH resource sets, each PUCCH resource set includes one or more PUCCH resource groups, each PUCCH resource group includes one or more PUCCH resources, and the one or more PUCCH resource groups included in the one or more PUCCH resource sets are respectively associated with the one or more parameters.

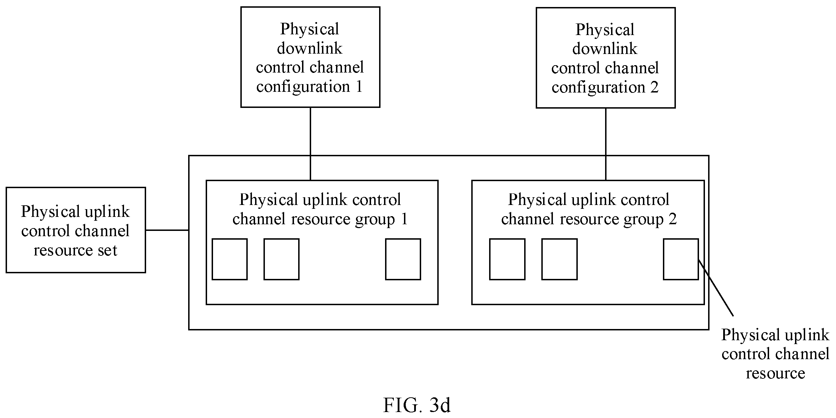

FIG. 3d is a schematic diagram of still another PUCCH resource configuration. For example, two TRPs serve a terminal device. One PUCCH configuration is sent by using RRC signaling, and the PUCCH configuration includes indication information of two PUCCH resource groups in one PUCCH resource set. Each PUCCH resource group includes one or more PUCCH resources. Two PUCCH resource groups in the PUCCH resource set are respectively associated with two PDCCH-configs/two CORESET groups/two search space groups/two PDSCH-configs/two DMRS port groups/two TBs (for example, in FIG. 3d, two PUCCH resource groups are associated with two PDCCH-configs). In FIG. 3d, one PUCCH configuration is used as an example. When a network side configures a PUCCH, there may be a plurality of PUCCH resource sets. In this implementation, a plurality of PUCCH resource groups included in each PUCCH resource set are respectively associated with a plurality of PDCCH-configs, in other words, a resource group in each PUCCH resource set is associated with a PDCCH-config in a same manner.

Based on the association relationship, the terminal device may determine, based on a PDCCH-config corresponding to DCI detected by the terminal device, a PUCCH resource group associated with the PDCCH-config, and select one or more PUCCH resources in the PUCCH resource group from one PUCCH resource set to send UCI, so that a PUCCH resource conflict can be avoided. A manner of determining other parameters associated with the PUCCH configuration is similar to what is described above.

S102. The network device sends downlink control information to the terminal device. The terminal device receives the downlink control information.

A plurality of network devices each send a plurality of pieces of DCI to the terminal device by using downlink control channel resources configured by the network devices for the terminal device. The terminal device blindly detects a piece of DCI based on a resource indicated by the PDCCH-config, or blindly detects a piece of DCI based on a resource indicated by the CORESET group, or blindly detects a piece of DCI based on a resource indicated by the search space group.

S103. The terminal device determines, based on one or more parameters of a downlink channel resource parameter corresponding to the DCI, a DMRS port-related parameter indicated by the DCI, or a transport block parameter enabled by the DCI, a PUCCH configuration associated with the one or more parameters.

Based on the DCI received by the terminal device, the downlink channel resource used to send the DCI may be distinguished, the DMRS port-related parameter of the PDSCH indicated by the DCI may be distinguished, and the TB parameter enabled by the DCI may be distinguished. The PUCCH configuration is further associated with the foregoing one or more parameters, so that the PUCCH configuration associated with the foregoing one or more parameters is used, and a PUCCH resource conflict can be avoided.

The foregoing implementations in FIG. 3a to FIG. 3d describe a plurality of PUCCH configurations. In each PUCCH configuration, how to specifically select a PUCCH resource is to be further described below with reference to the foregoing implementations.

Specifically, in the implementation shown in FIG. 3a, the terminal device may determine, based on the PDCCH-config corresponding to the detected DCI, a PUCCH resource configuration associated with the PDCCH-config. Further, in the determined PUCCH resource configuration, the terminal device determines one PUCCH resource set by using a quantity of bits of UCI, and selects one PUCCH resource from the determined PUCCH resource set by using a PUCCH resource indication (PUCCH resource indicator) field in the DCI.

In specific implementation, the terminal device may determine one PUCCH resource set based on a total quantity of bits of the UCI.

For example, a method for determining the PUCCH resource set based on the total quantity of bits of the UCI may be but is not limited to the following:
There are four PUCCH resource sets. If the terminal device transmits UCI of N_{UCI} bits, determining, by the terminal device, the PUCCH resource set is:
if N_{UCI}≤2, using a PUCCH resource in a first set; or
if 2<N_{UCI}<N₂, using a PUCCH resource in a second set, where N₂ is provided by a higher layer parameter N_2;
if N₂≤N_{UCI1}<N₃, using a PUCCH resource in a third set, where N₃ is provided by a higher layer parameter N_3; or
if N₃≤N_{UCI}≤N₄, using a PUCCH resource in a fourth set.

Further, a specific PUCCH resource (for example, 3 bits are used for indication) in the PUCCH resource set may be indicated with reference to the PUCCH resource indication field and another parameter that are included in the DCI. In the implementation shown in FIG. 3b, after the PUCCH resource group associated with the PDCCH-config is determined, a specific PUCCH resource set to be selected may be determined based on the quantity of bits of the UCI, and a specific PUCCH resource in the PUCCH resource set to be selected may be determined based on the PUCCH resource indication field in the DCI.

In the implementation shown in FIG. 3c, after the PUCCH resource set group associated with the PDCCH-config is determined, a specific PUCCH resource set to be selected may be determined based on the quantity of bits of the UCI, and a specific PUCCH resource in the PUCCH resource set to be selected may be determined based on the PUCCH resource indication field in the DCI.

In the implementation shown in FIG. 3d, a specific PUCCH resource set to be selected may be determined based on the quantity of bits of UCI, and after a PUCCH resource group that is in the PUCCH resource set and that is associated with the PDCCH-config is determined, a specific PUCCH resource in the PUCCH resource group to be selected may be determined based on the PUCCH resource indication field in the DCI.

S104. The terminal device sends uplink control information to the network device by using the determined PUCCH resource.

After determining the PUCCH resource, the terminal device sends the UCI to the corresponding network device by using the PUCCH resource.

It should be noted that, in a case of multi-station transmission, a plurality of pieces of DCI are not necessarily received at each moment. It is possible that only one PDSCH is scheduled for the terminal device in some cases, that is, only one piece of DCI is received in this case. However, the terminal device may still perform an operation by using the association relationship in this implementation.

In addition, a manner of determining whether the terminal device performs an operation by using the association relationship in this implementation may be as follows: if the network side configures the PUCCH configuration, that is, configures one or more PUCCH resource configurations, one or more PUCCH resource groups, one or more PUCCH resource sets, or one or more PUCCH resource set groups, the terminal device determines one PUCCH resource configuration, one PUCCH resource group, one PUCCH resource set, or one PUCCH resource set group based on the foregoing association relationship. Alternatively, if the network side configures only one PUCCH resource configuration, one PUCCH resource group, one PUCCH resource set, or one PUCCH resource set group, the terminal device also determines a PUCCH resource based on the foregoing association relationship.

According to the communication method provided in this implementation of this disclosure, PUCCH resource configuration indication information is associated with one or more parameters of the downlink channel resource, the demodulation reference signal port-related parameter, and the transport block parameter. When the terminal device sends uplink control information by using a PUCCH resource, a PUCCH resource conflict can be avoided, thereby ensuring transmission reliability.

In the foregoing implementation, the terminal device may send UCI to a plurality of network devices by using a plurality of PUCCH resources. In this implementation, the terminal device sends the UCI to only one network device by using one PUCCH resource, and another network device obtains feedback information of the PDSCH in a manner described in the following implementation. Detailed descriptions are as follows.

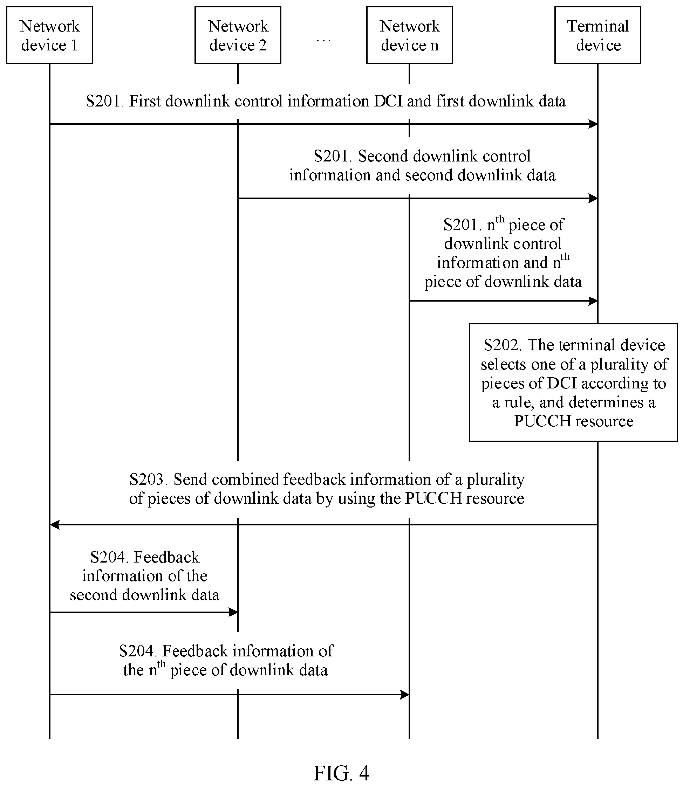

FIG. 4 is a schematic flowchart of another communication method according to an implementation of this disclosure.

S201. A plurality of network devices respectively send a plurality of pieces of DCI to a terminal device. The terminal device receives the plurality of pieces of DCI. The plurality of pieces of DCI are respectively corresponding to one or more of a downlink channel resource parameter, a demodulation reference signal port-related parameter, or a transport block parameter.

Referring to the foregoing implementation, the terminal device may detect the DCI based on one or more downlink channel resource parameters, or determine a DMRS port-related parameter of a PDSCH indicated by each of the plurality of pieces of received DCI, or determine a TB parameter enabled by the DCI.

S202. The terminal device selects one of the plurality of pieces of DCI according to a criterion, and determines a PUCCH resource.

In this implementation, feedback information of downlink data is reported to only one network device by using one PUCCH resource. The DCI is corresponding to one or more parameters of the downlink channel resource parameter, the demodulation reference signal port-related parameter, or the transport block parameter, and the PUCCH resource is associated with one or more parameters of the downlink channel resource parameter, the demodulation reference signal port-related parameter, or the transport block parameter (an association manner may be the association manner in the foregoing implementation or another association manner). Therefore, in this step, one piece of DCI is selected from the plurality of pieces of DCI, and a PUCCH resource indicated by the selected DCI is determined. It should be noted that one piece of DCI is selected according to a criterion herein. If there is no association relationship, feedback may be directly performed based on the PUCCH resource indicated by the DCI.

There are a plurality of DCI selection criteria. For example, DCI corresponding to a specific downlink channel resource parameter, demodulation reference signal port-related parameter, or transport block parameter is always selected. The DCI is corresponding to the downlink channel resource parameter, the demodulation reference signal port-related parameter, or the transport block parameter, and the PUCCH resource is further associated with the downlink channel resource parameter, the demodulation reference signal port-related parameter, or the transport block parameter. Therefore, the PUCCH resource associated with the downlink channel resource parameter or the demodulation reference signal port-related parameter or the transport block parameter may be determined based on the downlink channel resource parameter, the demodulation reference signal port-related parameter, or the transport block parameter corresponding to the selected DCI.

S203. The terminal device sends combined feedback information of the plurality of pieces of downlink data by using the PUCCH resource. A first network device receives the combined feedback information that is of the plurality of pieces of downlink data and that is sent by the terminal device.

The terminal device combines feedback information of the plurality of pieces of downlink data. Specifically, the combination is performed according to a preset combination rule. For example, DCI corresponding to a downlink channel resource parameter or a demodulation reference signal port-related parameter with a smaller parameter value, or a transport block parameter with a smaller identifier is selected, and feedback information of downlink data corresponding to the DCI is placed in a front field of the combined feedback information; and DCI corresponding to a downlink channel resource parameter or a demodulation reference signal port-related parameter with a larger parameter value, or a transport block parameter with a larger identifier is selected, and feedback information of downlink data corresponding to the DCI is placed in a rear field of the combined feedback information. Alternatively, an opposite selection method may be used. For another example, the feedback information of downlink data is combined with feedback information of downlink data corresponding to DCI that is earlier, or feedback information of downlink data corresponding to DCI that is later, or feedback information of downlink data corresponding to DCI that is closer to the time, or feedback information of downlink data corresponding to all DCI. In this way, after receiving the combined feedback information, a network device can successfully parse out the feedback information of each piece of downlink data according to the preset combination rule.

The terminal device sends the combined feedback information to the network device by using the foregoing determined PUCCH resource. For example, if the determined PUCCH resource is associated with the first network device, the combined feedback information is sent to the first network device, where the combined feedback information includes feedback information of first downlink data and feedback information of other pieces of downlink data that are sent by the first network device.

S204. The first network device notifies other network devices of feedback information of downlink data sent by the other network devices.

After receiving the combined feedback information of the downlink data, the first network device parses out the feedback information of each piece of downlink data according to the preset combination rule. In addition, the feedback information of the other pieces of downlink data is respectively notified to other network devices.

The following describes the foregoing DCI selection criterion and the feedback information combination rule by using a specific scenario.

In a scenario, if in one slot (slot) or another time unit, the terminal device needs to report feedback information of two pieces of downlink data, and the two pieces of DCI correspond to different PDCCH-configs/CORESET groups/search space groups/PDSCH-configs/DMRS port groups/TBs. The terminal device reports the feedback information of the downlink data corresponding to the two pieces of DCI together, and determines, according to a resource determining criterion, to use a resource indicated by specific DCI (for example, a resource indicated by DCI corresponding to a PDCCH-config/CORESET group/search space group/PDSCH-config/DMRS port group/TB with a smaller identifier is always used). In addition, a protocol needs to specify a combination order used during combination of the two pieces of feedback information (for example, feedback information of downlink data corresponding to a PDCCH-config/CORESET group/search space group/PDSCH-config/DMRS port group/TB with a smaller identifier always ranks first).

In another scenario, if the terminal device needs to report feedback information of a plurality of pieces of downlink data in a slot or another time unit, the plurality of pieces of DCI correspond to different PDCCH-configs/CORESET groups/search space groups/PDSCH-configs/DMRS port groups/TBs, there is one piece of DCI using the resource determining criterion (for example, a resource indicated by DCI corresponding to a PDCCH-config/CORESET group/search space group/PDSCH-config/DMRS port group/TB with a smaller identifier is always used), and there are a plurality of pieces of DCI that do not meet the resource determining criterion, a PUCCH resource indicated by the DCI determined according to the specified resource determining criterion is used, and feedback information is combined. A protocol needs to specify a combination order (for example, feedback information of downlink data corresponding to a PDCCH-config/CORESET group/search space group/PDSCH-config/DMRS port group/TB with a smaller identifier ranks first, and feedback information corresponding to DCI that is delivered earlier ranks first when identifiers are the same).

In still another scenario, if the terminal device needs to report feedback information of a plurality of pieces of downlink data in a slot or another time unit, a plurality of pieces of DCI correspond to different PDCCH-configs/CORESET groups/search space groups/PDSCH-configs/DMRS port groups/TBs, there are a plurality of pieces of DCI that meet the resource determining criterion, and there is one or more DCI that do not meet the resource determining criterion, combination is performed by using a specified combination rule (for example, feedback information corresponding to DCI that is sent earlier is combined, or feedback information corresponding to DCI that is sent later is combined, or feedback information corresponding to DCI that is sent closer is combined, or feedback information corresponding to all DCI is combined).

The foregoing scenario is merely an example. Certainly, this disclosure is not limited to the DCI selection criterion and the feedback information combination rule described in the foregoing scenario.

According to the communication method provided in this implementation of this disclosure, when feedback information of downlink data is reported by using only one PUCCH resource, DCI is selected according to a preset criterion, and an associated PUCCH resource is determined, so that a resource conflict can be avoided, and the feedback information of the downlink data can be reliably reported.

Two pieces of DCI sent by the network side are classified into primary DCI and secondary DCI. The primary DCI includes all information, the secondary DCI includes only a part of necessary information, and indication information of a PUCCH resource is included only in the primary DCI. How to report feedback information (that is, an ACK or a NACK) of the two pieces of downlink data by using the PUCCH resource is described in detail in the following.

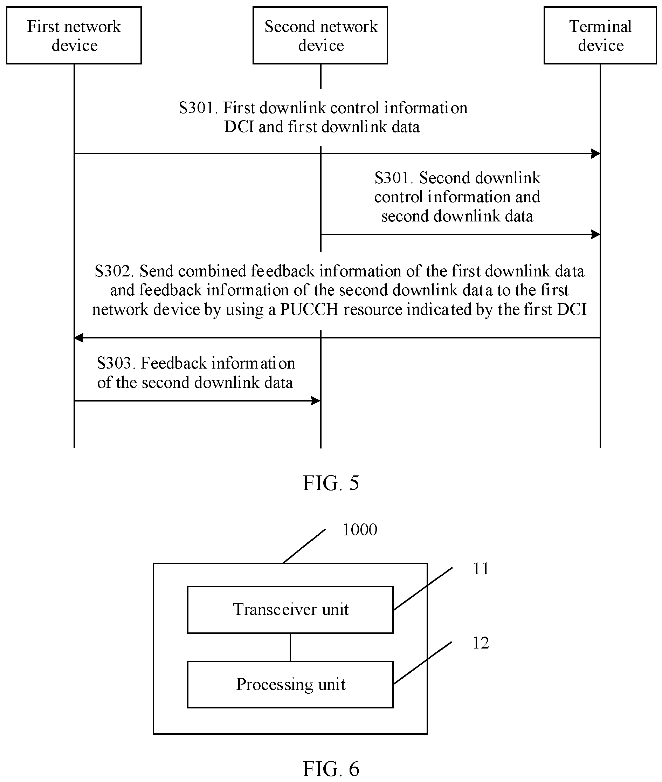

FIG. 5 is a schematic flowchart of another communication method according to an implementation of this disclosure. S301. A first network device sends first DCI to a terminal device, where the first DCI includes indication information of a PUCCH resource; and a second network device sends second DCI to the terminal device. The terminal device receives the first DCI from the first network device and the second DCI from the second network device.

In this implementation, the first network device and the second network device coordinate to send information or data to the terminal device. Specifically, the first network device sends the first DCI to the terminal device, and the second network device sends the second DCI to the terminal device. The first DCI may be primary DCI, the second DCI may be secondary DCI, and the indication information of the PUCCH resource is included only in the primary DCI. A specific PUCCH resource in a PUCCH resource set to be used may be determined based on PUCCH resource indication information in the primary DCI. For a method for determining the PUCCH resource set and the resource in the PUCCH resource set, refer to the foregoing implementations. Details are not described herein again. However, because the secondary DCI does not include the PUCCH resource indication information, the PUCCH resource for sending feedback information of downlink data to the second network device cannot be determined based on the secondary DCI.

S302. The terminal device sends combined feedback information of the downlink data to the first network device by using the PUCCH resource indicated by the first DCI, where the combined feedback information of the downlink data includes feedback information of first downlink data and feedback information of second downlink data. The first network device receives the combined feedback information that is of the downlink data and that is sent by the terminal device.

Herein, the first network device sends the first downlink data, where the feedback information of the first downlink data is feedback information sent to the first network device; and the second network device sends the second downlink data, where the feedback information of the second downlink data is feedback information that needs to be sent to the second network device. In this implementation, the feedback information of the first downlink data and the feedback information of the second downlink data are combined, and both are first sent to the first network device.

The terminal device combines the feedback information of the first downlink data and the feedback information of the second downlink data according to a preset combination rule. For example, the feedback information of the first downlink data is placed in the front fields of the combined feedback information, and the feedback information of the second downlink data is placed in the rear fields of the combined feedback information. Certainly, an opposite order may be used. In this way, after receiving the combined feedback information, the first network device can successfully parse out the feedback information of the first downlink data and the feedback information of the second downlink data.

The terminal device sends the combined feedback information of the downlink data to the first network device by using the PUCCH resource indicated by the first DCI.

S303. The first network device notifies the second network device of the feedback information of the second downlink data. The second network device receives the feedback information of the second downlink data.

After receiving the combined feedback information, the first network device can successfully parse out the feedback information of the first downlink data and the feedback information of the second downlink data according to the combination rule. In addition, the first network device notifies the second network device of the feedback information of the second downlink data.

The foregoing is described by using an example in which two network devices coordinate to send information or data to a terminal device. Actually, a plurality of network devices may alternatively coordinate to send a plurality of pieces of primary DCI and one or more secondary DCI. Further, combined feedback information may be fed back to the network device that sends the primary DCI by using a PUCCH resource indicated by one piece of the primary DCI, or feedback information of each primary downlink data may be respectively combined with feedback information of one or more secondary downlink data. The combination manner is not limited thereto.

According to the communication method provided in this implementation of this disclosure, by using a PUCCH resource indicated by DCI that includes indication information of a PUCCH resource, feedback is performed only to a network device that sends the DCI, to ensure that feedback information of downlink data is reliably sent to the network device.

The methods in the implementations of the present disclosure are described above in detail, and apparatuses in the implementations of the present disclosure are provided below.

Based on a same concept as those of the communication methods in the foregoing implementations, as shown in FIG. 6, an implementation of this disclosure further provides a communications apparatus 1000. The communications apparatus may be applied to the communication method shown in FIG. 2. The communications apparatus 1000 may be the terminal device 200 shown in FIG. 1, or may be a component (for example, a chip) applied to the terminal device 200. The communications apparatus 1000 includes a transceiver unit 11, and may further include a processing unit 12.

The transceiver unit 11 is configured to receive physical uplink control channel PUCCH resource configuration indication information from a network device, where the PUCCH resource configuration indication information is used to indicate a PUCCH configuration, and the PUCCH configuration is associated with a transport block parameter. It is not explicitly claimed but the PUCCH configuration can also be associated with one or more of the following parameters: a downlink channel resource parameter and a demodulation reference signal port-related parameter.

In an implementation, the transceiver unit 11 is further configured to receive downlink control information from the network device.

The processing unit 12 is configured to determine, based on the transport block parameter enabled by the downlink control information, a PUCCH configuration associated with the one or more parameters. It is not explicitly claimed but the determining can be also based on one or more parameters of a downlink channel resource parameter corresponding to the downlink control information and a demodulation reference signal port-related parameter of a physical downlink shared channel indicated by the downlink control information.

For more detailed descriptions of the foregoing transceiver unit 11 and the processing unit 12, directly refer to related descriptions of the terminal device in the method implementation shown in FIG. 2, and details are not described herein again.

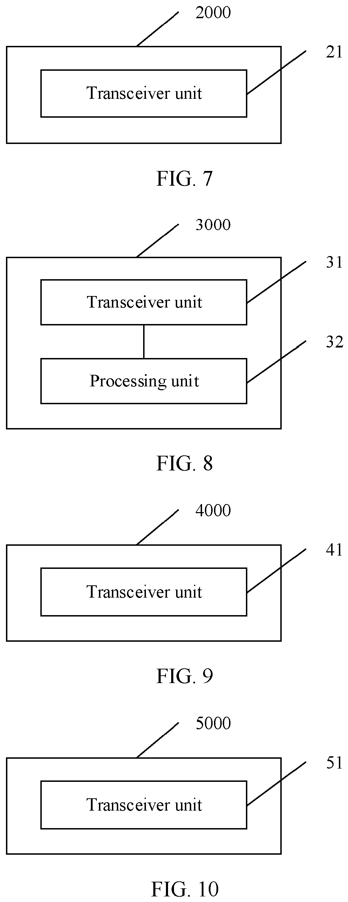

Based on a same concept as those of the communication methods in the foregoing implementations, as shown in FIG. 7, an implementation of this disclosure further provides a communications apparatus 2000. The communications apparatus may be applied to the communication method shown in FIG. 2. The communications apparatus 2000 may be the network device 100 shown in FIG. 1, or may be a component (for example, a chip) applied to the network device 100. The communications apparatus 2000 includes a transceiver unit 21.

A transceiver unit 21 is configured to send physical uplink control channel PUCCH resource configuration indication information to a terminal device, where the PUCCH resource configuration indication information is used to indicate a PUCCH configuration, and the PUCCH configuration is associated with a transport block parameter. It is not explicitly claimed but the PUCCH configuration can also be associated with one or more of the following parameters: a downlink channel resource parameter, and a demodulation reference signal port-related parameter.

In an implementation, the transceiver unit 21 is further configured to send downlink control information to the terminal device based on the downlink channel resource parameter.

For more detailed descriptions of the foregoing transceiver unit 21, directly refer to related descriptions of the network device in the method implementation shown in FIG. 2, and details are not described herein again.

Based on a same concept as those of the communication methods in the foregoing implementations, as shown in FIG. 8, an implementation of this disclosure further provides a communications apparatus 3000. The communications apparatus may be applied to the communication method shown in FIG. 4. The communications apparatus 3000 may be the terminal device 200 shown in FIG. 1, or may be a component (for example, a chip) applied to the terminal device 200. The communications apparatus 3000 includes a transceiver unit 31 and a processing unit 32.

The transceiver unit 31 is configured to receive a plurality of pieces of downlink control information, where the plurality of pieces of downlink control information are respectively corresponding to one or more downlink channel resource parameters, demodulation reference signal port-related parameters, or transport block parameters.

The processing unit 32 is configured to select one of the plurality of pieces of downlink control information according to a criterion, and determine a physical uplink control channel resource associated with the downlink channel resource parameter, the demodulation reference signal port-related parameter, or the transport block parameter based on a downlink channel resource parameter, a demodulation reference signal port-related parameter, or a transport block parameter corresponding to the selected downlink control information.

The transceiver unit 31 is further configured to send combined feedback information of the plurality of pieces of downlink data by using the physical uplink control channel resource.

In an implementation, the processing unit 32 is further configured to combine the feedback information of the plurality of pieces of downlink control information according to a preset combination rule.

For more detailed descriptions of the foregoing transceiver unit 31 and the processing unit 32, directly refer to related descriptions of the terminal device in the method implementation shown in FIG. 4, and details are not described herein again.

Based on a same concept as those of the communication methods in the foregoing implementations, as shown in FIG. 9, an implementation of this disclosure further provides a communications apparatus 4000. The communications apparatus may be applied to the communication method shown in FIG. 4. The communications apparatus 4000 may be the network device 100 shown in FIG. 1, or may be a component (for example, a chip) applied to the network device 100. The communications apparatus 4000 includes a transceiver unit 41.

The transceiver unit 41 is configured to send downlink control information to a terminal device, where the downlink control information corresponds to a downlink channel resource parameter, a demodulation reference signal port-related parameter, or a transport block parameter.

The transceiver unit 41 is configured to receive combined feedback information that is of a plurality of pieces of downlink data and that is sent by the terminal device.

The transceiver unit 41 is further configured to notify another network device of feedback information of downlink data sent by the another network device.

For more detailed descriptions of the foregoing transceiver unit 41, directly refer to related descriptions of the network device in the method implementation shown in FIG. 4, and details are not described herein again.

Based on a same concept as those of the communication methods in the foregoing implementations, as shown in FIG. 10, an implementation of this disclosure further provides a communications apparatus 5000. The communications apparatus may be applied to the communication method shown in FIG. 5. The communications apparatus 5000 may be the terminal device 200 shown in FIG. 1, or may be a component (for example, a chip) applied to the terminal device 200. The communications apparatus 5000 includes a transceiver unit 51.

The transceiver unit 51 is configured to receive first downlink control information from a first network device and second downlink control information from a second network device, where the first downlink control information includes indication information of a physical uplink control channel resource.

The transceiver unit 51 is further configured to send combined feedback information of downlink data to the first network device by using the physical uplink control channel resource indicated by the first downlink control information, where the combined feedback information of the downlink data includes feedback information of first downlink data and feedback information of second downlink data.

For more detailed descriptions of the foregoing transceiver unit 51, directly refer to related descriptions of the terminal device in the method implementation shown in FIG. 5, and details are not described herein again.

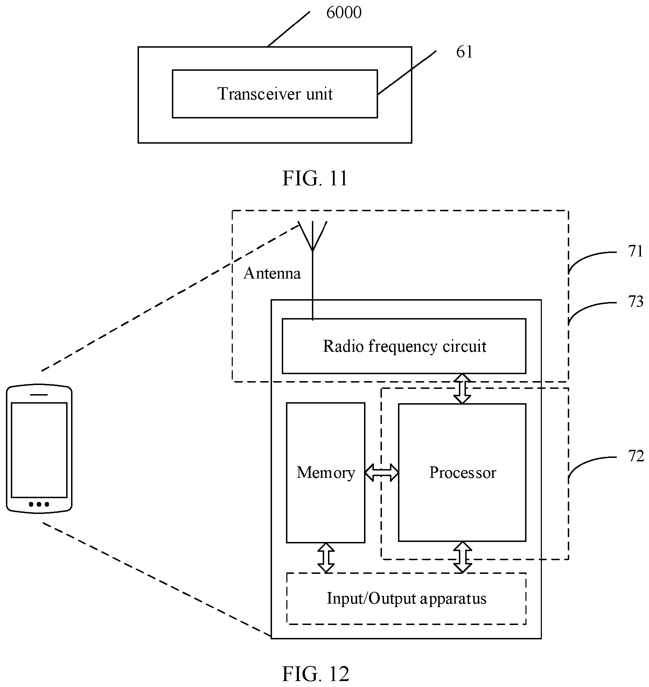

Based on a same concept as those of the communication methods in the foregoing implementations, as shown in FIG. 11, an implementation of this disclosure further provides a communications apparatus 6000. The communications apparatus may be applied to the communication method shown in FIG. 5. The communications apparatus 2000 may be the network device 100 shown in FIG. 1, or may be a component (for example, a chip) applied to the network device 100. The communications apparatus 6000 includes a transceiver unit 61.

The transceiver unit 61 is configured to send first downlink control information to a terminal device, where the first downlink control information includes indication information of a physical uplink control channel resource.

The transceiver unit 61 is further configured to receive combined feedback information of downlink data that is sent by the terminal device, where the combined feedback information of the downlink data includes feedback information of first downlink data and feedback information of second downlink data.

The transceiver unit 61 is further configured to notify a second network device of feedback information of the second downlink data.

For more detailed descriptions of the foregoing transceiver unit 61, directly refer to related descriptions of the network device in the method implementation shown in FIG. 5, and details are not described herein again.

An implementation of this disclosure further provides a communications apparatus. The communications apparatus is configured to perform the foregoing communication methods. Some or all of the foregoing communication methods may be implemented by using hardware, or may be implemented by using software.

Optionally, in specific implementation, the communications apparatus may be a chip or an integrated circuit.

Optionally, when some or all of the communication methods in the foregoing implementations are implemented by using software, the communications apparatus includes: a memory is configured to store a program; and a processor is configured to execute the program stored in the memory, so that when the program is executed, the communications apparatus is enabled to implement the communication methods provided in the foregoing implementations.

Optionally, the foregoing memory may be a physically independent unit, or may be integrated with the processor.

Optionally, when some or all of the communication methods in the foregoing implementations are implemented by using software, the communications apparatus may alternatively include only a processor. The memory configured to store programs is located outside the communications apparatus. The processor is connected to the memory by using a circuit/wire, and is configured to read and execute the programs stored in the memory.

The processor may be a central processing unit (central processing unit, CPU), a network processor (network processor, NP), or a combination of a CPU and an NP.

The processor may further include a hardware chip. The foregoing hardware chip may be an application-specific integrated circuit (application-specific integrated circuit, ASIC), a programmable logic device (programmable logic device, PLD), or a combination thereof. The foregoing PLD may be a complex programmable logic device (complex programmable logic device, CPLD), a field-programmable logic gate array (field-programmable gate array, FPGA), generic array logic (generic array logic, GAL), or any combination thereof.

The memory may include a volatile memory (volatile memory), for example, a random-access memory (random-access memory, RAM). The memory may alternatively include a non-volatile memory (non-volatile memory), for example, a flash memory (flash memory), a hard disk drive (hard disk drive, HDD), or a solid-state drive (solid-state drive, SSD). The memory may alternatively include a combination of the memories of the foregoing types.

FIG. 12 is a schematic structural diagram of a simplified terminal device. For ease of understanding and illustration, an example in which the terminal device is a mobile phone is used in FIG. 12. As shown in FIG. 12, in an implementation, the terminal device may include a processor. The processor is configured to implement the methods performed by the terminal device in the foregoing implementations.

The processor is mainly configured to process a communication protocol and communication data, control the terminal device, execute a software program, process data of the software program, and so on. The terminal device may further include a memory, and the memory is mainly configured to store a software program and data. The terminal device may further include any one of a radio frequency circuit, an antenna, and an input/output apparatus. The radio frequency circuit is mainly configured to convert a baseband signal and a radio frequency signal and process the radio frequency signal. The antenna is mainly configured to receive and send a radio frequency signal in an electromagnetic wave form. The input/output apparatus such as a touchscreen, a display screen, or a keyboard, is mainly configured to receive data input by a user and output data to the user. It should be noted that some types of terminal devices may have no input/output apparatus.

In another implementation, the terminal device includes a processor and a transceiver apparatus. The processor is coupled to the transceiver apparatus, where the processor is configured to execute a computer program or an instruction, to control the transceiver apparatus to receive and send information. When the processor executes the computer program or the instruction, the processor is further configured to implement the methods performed by the terminal device in the foregoing implementations.

In this implementation of this disclosure, the antenna and the radio frequency circuit that have receiving and sending functions may be considered as a receiving unit and a sending unit (which may also be collectively referred to as a transceiver unit) of the terminal device, and the processor with a processing function may be considered as a processing unit of the terminal device. As shown in FIG. 12, the terminal device includes a receiving unit 71, a processing unit 72, and a sending unit 73. The receiving unit 71 may also be referred to as a receiver, a receiver machine, a receiving circuit, and the like. The sending unit 73 may also be referred to as a transmitter, a transmitting device, a transmitter machine, a transmitting circuit, and the like. The processing unit may also be referred to as a processor, a processing board, a processing module, a processing apparatus, and the like.

For example, in an implementation, the receiving unit 71 is configured to perform functions of the terminal device in steps S101 and S102 in the implementation shown in FIG. 2; the processing unit 72 is configured to perform step S103 in the implementation shown in FIG. 2; and the sending unit 73 is configured to perform a function of the terminal device in step S104 in the implementation shown in FIG. 2.

For another example, in another implementation, the receiving unit 71 is configured to perform a function of the terminal device in step S201 in the implementation shown in FIG. 4; the processing unit 72 is configured to perform step S202 in the implementation shown in FIG. 4; and the sending unit 73 is configured to perform a function of the terminal device in step S203 in the implementation shown in FIG. 4.

For another example, in still another implementation, the receiving unit 71 is configured to perform functions of the terminal device in step S301 in the implementation shown in FIG. 5; and the sending unit 73 is configured to perform a function of the terminal device in step S302 in the implementation shown in FIG. 5.

In still another implementation, the terminal device includes a processor and a memory. The memory stores a computer program or an instruction. When the processor executes the computer program or the instruction, the processor is configured to implement the methods performed by the terminal device in the foregoing implementations.

When data needs to be sent, after performing baseband processing on the to-be-sent data, the processor outputs a baseband signal to the radio frequency circuit, and the radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal by using the antenna, converts the radio frequency signal into a baseband signal, and outputs the baseband signal to the processor. The processor converts the baseband signal into data, and processes the data. For ease of description, FIG. 12 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this implementation of this disclosure.

In an implementation, a communications apparatus is provided. The communications apparatus includes a processor and a transceiver apparatus. The processor is coupled to the transceiver apparatus, where the processor is configured to execute a computer program or an instruction, to control the transceiver apparatus to receive and send information. When the processor executes the computer program or the instruction, the processor is further configured to implement the method performed by the network device in the foregoing method implementations.

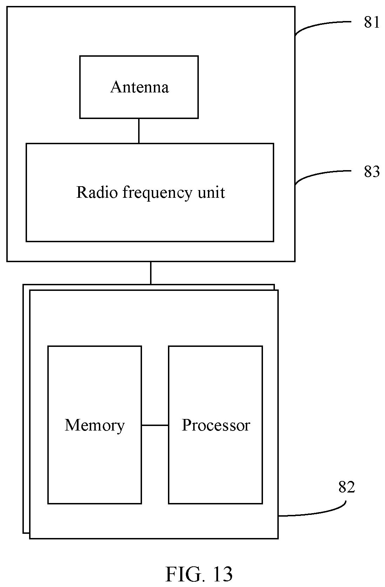

FIG. 13 is a schematic structural diagram of a simplified network device. The network device includes a part 82 and a part for radio frequency signal receiving/sending and conversion. The part for radio frequency signal receiving and sending and conversion further includes a receiving unit 81 and a sending unit 83 (which may also be collectively referred to as a transceiver unit). The part for radio frequency signal receiving/sending and conversion is mainly configured to: receive/send a radio frequency signal and perform conversion between a radio frequency signal and a baseband signal. The part 82 is mainly configured to perform baseband processing, control the network device, and the like. The receiving unit 81 may also be referred to as a receiver, a receiver machine, a receiving circuit, and the like. The sending unit 83 may also be referred to as a transmitter, a transmitting device, a transmitter machine, a transmitting circuit, and the like. The part 82 is usually a control center of the network device, and may usually be referred to as a processing unit, configured to control the network device to perform the steps performed by the network device in FIG. 2, FIG. 4, or FIG. 5. For details, refer to the foregoing descriptions of the related parts.

For example, in an implementation, the sending unit 83 is configured to perform functions of the network device in steps S101 and S102 in the implementation shown in FIG. 2; and the receiving unit 81 is configured to perform a function of the network device in step S104 in the implementation shown in FIG. 2.

For another example, in another implementation, the sending unit 83 is configured to perform functions of the network device in steps S201 and S204 in the implementation shown in FIG. 4; and the receiving unit 81 is configured to perform a function of the network device in step S203 in the implementation shown in FIG. 4.

For another example, in still another implementation, the sending unit 83 is configured to perform functions of the network device in steps S301 and S303 in the implementation shown in FIG. 5; and the receiving unit 81 is configured to perform a function of the network device in step S302 in the implementation shown in FIG. 5.

In another implementation, a communications apparatus is provided. The communications apparatus includes a processor. The processor is configured to implement the methods performed by the network device in the foregoing method implementations.

In still another implementation, a communications apparatus is provided. The communications apparatus includes a processor and a memory. The memory stores a computer program or an instruction, and when the processor executes the computer program or the instruction, the processor is configured to implement the methods performed by the network device in the foregoing method implementations.

As shown in FIG. 13, the part 82 may include one or more boards. Each board may include one or more processors and one or more memories. The processor is configured to read and execute a program in the memory to implement a baseband processing function and control the network device. If there are a plurality of boards, the boards may be interconnected to enhance a processing capability. In an optional implementation, alternatively, the plurality of boards may share one or more processors, or the plurality of boards share one or more memories, or the plurality of boards simultaneously share one or more processors.

An implementation of this disclosure further provides a computer-readable storage medium, where the computer-readable storage medium stores a computer program or an instruction, and when the computer program or the instruction is executed, the method in the foregoing implementation is implemented.

An implementation of this disclosure further provides a communications system, including the communications apparatuses in the foregoing implementations.

A person skilled in the art may clearly understand that, for the purpose of convenient and brief description, for detailed working processes of the foregoing system, apparatus, and unit, refer to corresponding processes in the foregoing method implementations, and details are not described herein again.

In the implementations provided in this disclosure, it should be understood that the disclosed system, apparatus, and methods may be implemented in another manner. For example, division into the units is merely logical function division and may be other division in an actual implementation. For example, a plurality of units or components may be combined or integrated into another system, or some features may be ignored or not performed. The displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the implementations.

All or some of the foregoing implementations may be implemented by using software, hardware, firmware, or any combination thereof. When software is used to implement the implementations, all or some of the implementations may be implemented in a form of a computer program product. The computer program product includes one or more computer instructions. When the computer program instructions are loaded and executed on a computer, the procedures or functions according to the implementations of this disclosure are all or partially generated. The computer may be a general-purpose computer, a dedicated computer, a computer network, or other programmable apparatuses. The computer instruction may be stored in a computer-readable storage medium, or may be transmitted by using a computer-readable storage medium. The computer instruction may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random access memory (random access memory, RAM), or a magnetic medium such as a floppy disk, a hard disk, a magnetic tape, a magnetic disk, or an optical medium such as a digital versatile disc (digital versatile disc, DVD), or a semiconductor medium such as a solid-state drive (solid state disk, SSD).

## Claims

1. A communication method, comprising:
receiving physical uplink control channel, PUCCH, resource configuration indication information from a network device (100), wherein the PUCCH resource configuration indication information is used to indicate a PUCCH configuration, and the PUCCH configuration is associated with a transport block parameter;
receiving downlink control information from the network device (100); and
determining, based on the transport block parameter enabled by the downlink control information, the PUCCH configuration associated with the transport block parameter.

2. The method according to claim 1, wherein physical uplink control channel, PUCCH, resource configuration indication information are received from a plurality of network devices (100), and a plurality of associated PUCCH configurations are determined based on parameters corresponding to downlink control information, DCI, received from the plurality of network devices.

3. A communication method, comprising:
sending, by a network device (100), physical uplink control channel, PUCCH, resource configuration indication information to a terminal device (200), wherein the PUCCH resource configuration indication information is used to indicate a PUCCH configuration, and the PUCCH configuration is associated with a transport block parameter;
sending, by the network device (100), downlink control information to the terminal device (200) based on a downlink channel resource parameter for the terminal device (200) to determine, based the transport block parameter enabled by the downlink control information, the PUCCH configuration associated with the transport block parameter.

4. The method according to claim 3, wherein the downlink channel resource parameter comprises one or more of the following resource parameters: a physical downlink control channel resource configuration, a control resource set group, a search space group, and a physical downlink shared channel resource configuration.

5. A communications apparatus (1000, 2000, 3000, 4000, 5000, 6000), comprising:
a transceiver unit (11, 21, 31, 41, 51, 61), configured to receive physical uplink control channel, PUCCH, resource configuration indication information from a network device (100), wherein the PUCCH resource configuration indication information is used to indicate a PUCCH configuration, and the PUCCH configuration is associated with a transport block parameter;
the transceiver unit (11, 21, 31, 41, 51, 61) is further configured to receive downlink control information from the network device (100); and
the communications apparatus (1000, 2000, 3000, 4000, 5000, 6000) further comprises:
a processing unit (12, 32), configured to determine, based on the transport block parameter enabled by the downlink control information, the PUCCH configuration associated with the transport block parameter.

6. The communications apparatus (1000, 2000, 3000, 4000, 5000, 6000) according to claim 5, wherein the transceiver unit (11, 21, 31, 41, 51, 61) is configured to receive physical uplink control channel, PUCCH, resource configuration indication information from a plurality of network devices (100), and a plurality of associated PUCCH configurations are determined based on parameters corresponding to downlink control information, DCI, received from the plurality of network devices.

7. The communications apparatus (1000, 2000, 3000, 4000, 5000, 6000) according to any one of claims 5 to 6, wherein a downlink channel resource parameter comprises one or more of the following resource parameters: a physical downlink control channel resource configuration, a control resource set group, a search space group, and a physical downlink shared channel resource configuration.

8. A communications apparatus (1000, 2000, 3000, 4000, 5000, 6000), comprising:
a transceiver unit (11, 21, 31, 41, 51, 61), configured to send physical uplink control channel, PUCCH, resource configuration indication information to a terminal device (200), wherein the PUCCH resource configuration indication information is used to indicate a PUCCH configuration, and the PUCCH configuration is associated with a transport block parameter;
the transceiver unit (11, 21, 31, 41, 51, 61) is further configured to send downlink control information to the terminal device (200) based on a downlink channel resource parameter for the terminal device (200) to determine, based on the transport block parameter enabled by the downlink control information, the PUCCH configuration associated with the transport block parameter.

9. The communications apparatus (1000, 2000, 3000, 4000, 5000, 6000) according to claim 8, wherein the downlink channel resource parameter comprises one or more of the following resource parameters: a physical downlink control channel resource configuration, a control resource set group, a search space group, and a physical downlink shared channel resource configuration.

10. A computer-readable storage medium, wherein the computer-readable storage medium stores a computer program or an instruction, and when the computer program or the instruction is executed, the method according to any one of claims 1 to 2 or 3 to 4 is implemented.

11. A computer program product, comprising a computer program, wherein when the computer program is run on a computer, the computer is enabled to perform the method according to any one of claims 1 to 2 or 3 to 4.

## Patentansprüche

1. Kommunikationsverfahren, umfassend:
Empfangen von Ressourcenkonfigurationsanzeigeinformationen für einen physischen Uplink-Steuerkanal (PUCCH) von einer Netzwerkvorrichtung (100), wobei die Ressourcenkonfigurationsanzeigeinformationen für den PUCCH verwendet werden, um eine PUCCH-Konfiguration anzuzeigen, und wobei die PUCCH-Konfiguration mit einem Transportblockparameter verknüpft ist;
Empfangen von Downlink-Steuerinformationen von der Netzwerkvorrichtung (100); und
Bestimmen der mit dem Transportblockparameter verknüpften PUCCH-Konfiguration basierend auf dem durch die Downlink-Steuerinformationen aktivierten Transportblockparameter.

2. Verfahren nach Anspruch 1, wobei Ressourcenkonfigurationsanzeigeinformationen für einen physischen Uplink-Steuerkanal (PUCCH) von einer Vielzahl von Netzwerkvorrichtungen (100) empfangen werden, und eine Vielzahl zugehöriger PUCCH-Konfigurationen basierend auf Parametern bestimmt wird, die den von der Vielzahl von Netzwerkvorrichtungen empfangenen Downlink-Steuerinformationen (DCI) entsprechen.

3. Kommunikationsverfahren, umfassend:
Senden von Ressourcenkonfigurationsanzeigeinformationen für einen physischen Uplink-Steuerkanal (PUCCH) durch eine Netzwerkvorrichtung (100) an eine Endvorrichtung (200), wobei die Ressourcenkonfigurationsanzeigeinformationen für den PUCCH verwendet werden, um eine PUCCH-Konfiguration anzuzeigen, und wobei die PUCCH-Konfiguration mit einem Transportblockparameter verknüpft ist;
Senden von Downlink-Steuerinformationen durch die Netzwerkvorrichtung (100) an die Endvorrichtung (200) basierend auf einem Downlink-Kanalressourcenparameter, sodass die Endvorrichtung (200) basierend auf dem durch die Downlink-Steuerinformationen aktivierten Transportblockparameter die mit dem Transportblockparameter verknüpfte PUCCH-Konfiguration bestimmt.

4. Verfahren nach Anspruch 3, wobei der Downlink-Kanalressourcenparameter einen oder mehrere der folgenden Ressourcenparameter umfasst: eine physikalische Downlink-Steuerkanal-Ressourcenkonfiguration, eine Steuerressourcensatzgruppe, eine Suchraumgruppe und eine physikalische Downlink-Shared-Kanal-Ressourcenkonfiguration.

5. Kommunikationsvorrichtung (1000, 2000, 3000, 4000, 5000, 6000), umfassend:
eine Transceivereinheit (11, 21, 31, 41, 51, 61), die dazu konfiguriert ist, Ressourcenkonfigurationsanzeigeinformationen für einen physischen Uplink-Steuerkanal (PUCCH) von einer Netzwerkvorrichtung (100) zu empfangen, wobei die Ressourcenkonfigurationsanzeigeinformationen für den PUCCH verwendet werden, um eine PUCCH-Konfiguration anzuzeigen, und wobei die PUCCH-Konfiguration mit einem Transportblockparameter verknüpft ist;
wobei die Transceivereinheit (11, 21, 31, 41, 51, 61) ferner dazu konfiguriert ist, Downlink-Steuerinformationen von der Netzwerkvorrichtung (100) zu empfangen; und
wobei die Kommunikationsvorrichtung (1000, 2000, 3000, 4000, 5000, 6000) ferner umfasst:
eine Verarbeitungseinheit (12, 32), die dazu konfiguriert ist, basierend auf dem durch die Downlink-Steuerinformationen aktivierten Transportblockparameter die mit dem Transportblockparameter verknüpfte PUCCH-Konfiguration zu bestimmen.

6. Kommunikationsvorrichtung (1000, 2000, 3000, 4000, 5000, 6000) nach Anspruch 5, wobei die Transceivereinheit (11, 21, 31, 41, 51, 61) dazu konfiguriert ist, Ressourcenkonfigurationsanzeigeinformationen für einen physischen Uplink-Steuerkanal (PUCCH) von einer Vielzahl von Netzwerkvorrichtungen (100) zu empfangen, und eine Vielzahl von zugehörigen PUCCH-Konfigurationen basierend auf Parametern bestimmt wird, die den von der Vielzahl von Netzwerkvorrichtungen empfangenen Downlink-Steuerinformationen (DCI) entsprechen.

7. Kommunikationsvorrichtung (1000, 2000, 3000, 4000, 5000, 6000) nach einem der Ansprüche 5 oder 6, wobei ein Downlink-Kanalressourcenparameter einen oder mehrere der folgenden Ressourcenparameter umfasst: eine physikalische Downlink-Steuerkanal-Ressourcenkonfiguration, eine Steuerressourcensatzgruppe, eine Suchraumgruppe und eine physikalische Downlink-Shared-Kanal-Ressourcenkonfiguration.

8. Kommunikationsvorrichtung (1000, 2000, 3000, 4000, 5000, 6000), umfassend:
eine Transceivereinheit (11, 21, 31, 41, 51, 61), die dazu konfiguriert ist, Ressourcenkonfigurationsanzeigeinformationen für einen physischen Uplink-Steuerkanal (PUCCH) an eine Endvorrichtung (200) zu senden, wobei die Ressourcenkonfigurationsanzeigeinformationen für den PUCCH verwendet werden, um eine PUCCH-Konfiguration anzuzeigen, und wobei die PUCCH-Konfiguration mit einem Transportblockparameter verknüpft ist;
wobei die Transceivereinheit (11, 21, 31, 41, 51, 61) ferner dazu konfiguriert ist, Downlink-Steuerinformationen an die Endvorrichtung (200) basierend auf einem Downlink-Kanalressourcenparameter zu senden, sodass die Endvorrichtung (200) basierend auf dem durch die Downlink-Steuerinformationen aktivierten Transportblockparameter die mit dem Transportblockparameter verknüpfte PUCCH-Konfiguration bestimmt.

9. Kommunikationsvorrichtung (1000, 2000, 3000, 4000, 5000, 6000) nach Anspruch 8, wobei der Downlink-Kanalressourcenparameter einen oder mehrere der folgenden Ressourcenparameter umfasst: eine physikalische Downlink-Steuerkanal-Ressourcenkonfiguration, eine Steuerressourcensatzgruppe, eine Suchraumgruppe und eine physikalische Downlink-Shared-Kanal-Ressourcenkonfiguration.

10. Computerlesbares Speichermedium, wobei das computerlesbare Speichermedium ein Computerprogramm oder eine Anweisung speichert, und wobei, wenn das Computerprogramm oder die Anweisung ausgeführt wird, das Verfahren nach einem der Ansprüche 1 bis 2 oder 3 bis 4 implementiert wird.

11. Computerprogrammprodukt, umfassend ein Computerprogramm, wobei, wenn das Computerprogramm auf einem Computer ausgeführt wird, der Computer dazu veranlasst wird, das Verfahren nach einem der Ansprüche 1 bis 2 oder 3 bis 4 durchzuführen.

## Revendications

1. Procédé de communication, comprenant :
la réception des informations d'indication de configuration de ressource de canal de commande de liaison montante physique, PUCCH, à partir d'un dispositif réseau (100), dans lequel les informations d'indication de configuration de ressource PUCCH sont utilisées pour indiquer une configuration PUCCH, et la configuration PUCCH est associée à un paramètre de bloc de transport ;
la réception d'informations de commande de liaison descendante à partir du dispositif réseau (100) ; et
la détermination, sur la base du paramètre de bloc de transport activé par les informations de commande de liaison descendante, de la configuration PUCCH associée au paramètre de bloc de transport.

2. Procédé selon la revendication 1, dans lequel des informations d'indication de configuration de ressource de canal de commande de liaison montante physique, PUCCH, sont reçues à partir d'une pluralité de dispositifs réseau (100), et une pluralité de configurations PUCCH associées sont déterminées sur la base de paramètres correspondant à des informations de commande de liaison descendante, DCI, reçues de la pluralité de dispositifs réseau.

3. Procédé de communication, comprenant :
l'envoi, par un dispositif réseau (100), d'informations d'indication de configuration de ressource de canal de commande de liaison montante physique, PUCCH, à un dispositif terminal (200), dans lequel les informations d'indication de configuration de ressource PUCCH sont utilisées pour indiquer une configuration PUCCH, et la configuration PUCCH est associée à un paramètre de bloc de transport ;
l'envoi, par le dispositif réseau (100), d'informations de commande de liaison descendante au dispositif terminal (200) sur la base d'un paramètre de ressource de canal de liaison descendante pour le dispositif terminal (200) afin de déterminer, sur la base du paramètre de bloc de transport activé par les informations de commande de liaison descendante, la configuration PUCCH associée au paramètre de bloc de transport.

4. Procédé selon la revendication 3, dans lequel le paramètre de ressource de canal de liaison descendante comprend un ou plusieurs des paramètres de ressource suivants : une configuration de ressource de canal de commande de liaison descendante physique, un groupe d'ensembles de ressources de commande, un groupe d'espaces de recherche et une configuration de ressource de canal partagé de liaison descendante physique.

5. Appareil de communication (1000, 2000, 3000, 4000, 5000, 6000), comprenant :
une unité émettrice-réceptrice (11, 21, 31, 41, 51, 61), configurée pour recevoir des informations d'indication de configuration de ressource de canal de commande de liaison montante physique, PUCCH, à partir d'un dispositif réseau (100), dans lequel les informations d'indication de configuration de ressource PUCCH sont utilisées pour indiquer une configuration PUCCH, et la configuration PUCCH est associée à un paramètre de bloc de transport ;
l'unité émettrice-réceptrice (11, 21, 31, 41, 51, 61) est également configurée pour recevoir des informations de commande de liaison descendante à partir du dispositif réseau (100) ; et
l'appareil de communication (1000, 2000, 3000, 4000, 5000, 6000) comprend également :
une unité de traitement (12, 32), configurée pour déterminer, sur la base du paramètre de bloc de transport activé par les informations de commande de liaison descendante, la configuration PUCCH associée au paramètre de bloc de transport.

6. Appareil de communication (1000, 2000, 3000, 4000, 5000, 6000) selon la revendication 5, dans lequel l'unité émettrice-réceptrice (11, 21, 31, 41, 51, 61) est configurée pour recevoir des informations d'indication de configuration de ressource de canal de commande de liaison montante physique, PUCCH, à partir d'une pluralité de dispositifs réseau (100), et une pluralité de configurations PUCCH associées sont déterminées sur la base de paramètres correspondant à des informations de commande de liaison descendante, DCI, reçues à partir de la pluralité de dispositifs réseau.

7. Appareil de communication (1000, 2000, 3000, 4000, 5000, 6000) selon l'une quelconque des revendications 5 et 6, dans lequel un paramètre de ressource de canal de liaison descendante comprend un ou plusieurs des paramètres de ressource suivants : une configuration de ressource de canal de commande de liaison descendante physique, un groupe d'ensembles de ressources de commande, un groupe d'espaces de recherche et une configuration de ressource de canal partagé de liaison descendante physique.

8. Appareil de communication (1000, 2000, 3000, 4000, 5000, 6000), comprenant :
une unité émettrice-réceptrice (11, 21, 31, 41, 51, 61), configurée pour envoyer des informations d'indication de configuration de ressource de canal de commande de liaison montante physique, PUCCH, à un dispositif terminal (200), dans lequel les informations d'indication de configuration de ressource PUCCH sont utilisées pour indiquer une configuration PUCCH, et la configuration PUCCH est associée à un paramètre de bloc de transport ;
l'unité émettrice-réceptrice (11, 21, 31, 41, 51, 61) est également configurée pour envoyer des informations de commande de liaison descendante au dispositif terminal (200) sur la base d'un paramètre de ressource de canal de liaison descendante pour le dispositif terminal (200) afin de déterminer, sur la base du paramètre de bloc de transport activé par les informations de commande de liaison descendante, la configuration PUCCH associée au paramètre de bloc de transport.

9. Appareil de communication (1000, 2000, 3000, 4000, 5000, 6000) selon la revendication 8, dans lequel le paramètre de ressource de canal de liaison descendante comprend un ou plusieurs des paramètres de ressource suivants : une configuration de ressource de canal de commande de liaison descendante physique, un groupe d'ensembles de ressources de commande, un groupe d'espaces de recherche et une configuration de ressource de canal partagé de liaison descendante physique.

10. Support de stockage lisible par ordinateur, dans lequel le support de stockage lisible par ordinateur stocke un programme informatique ou une instruction, et lorsque le programme informatique ou l'instruction est exécuté, le procédé selon l'une quelconque des revendications 1 et 2 ou 3 et 4 est mis en œuvre.

11. Produit de programme informatique, comprenant un programme informatique, dans lequel lorsque le programme informatique fonctionne sur un ordinateur, l'ordinateur est activé pour réaliser le procédé selon l'une quelconque des revendications 1 et 2 ou 3 et 4.
